# EUROPÄISCHE PATENTSCHRIFT

(11) **EP 4 453 670 B1**
(45) Veröffentlichungstag und Bekanntmachung des Hinweises auf die Patenterteilung: **19.08.2026**
(21) Anmeldenummer: 22818090.7
(22) Anmeldetag: 01.12.2022
(51) Int. Cl.: G05B 19/042

(54) **VERFAHREN ZUR VORHERSAGE DER KOMPATIBILITÄT VON BAUGRUPPEN FÜR EINE FUNKTIONSEINHEIT EINES FELDGERÄTS**
METHOD FOR PREDICTING THE COMPATIBILITY OF ASSEMBLIES FOR A FUNCTIONAL UNIT OF A FIELD DEVICE
PROCÉDÉ DE PRÉDICTION DE LA COMPATIBILITÉ D'ENSEMBLES POUR UNE UNITÉ FONCTIONNELLE D'UN APPAREIL DE TERRAIN

(30) Priorität: 23.12.2021 DE 102021134611
(43) Veröffentlichungstag der Anmeldung: 30.10.2024
(73) Patentinhaber: Endress+Hauser SE+Co. KG, 79689 Maulburg (DE)
(72) Erfinder: LEUFKE, Philipp, 79618 Rheinfelden (DE); WERNER, Patrick, 79585 Steinen (DE); TAYYUB, Jawad, 79689 Maulburg (DE)
(74) Vertreter: Endress + Hauser Group Services (Deutschland) AG+Co. KG
(86) Internationale Anmeldenummer: PCT/EP2022/084086
(87) Internationale Veröffentlichungsnummer: WO 2023/117365

(56) Entgegenhaltungen:
- EP-A1- 3 855 259
- DE-A1- 102008 030 315

## Beschreibung

Die Erfindung betrifft ein automatisiertes Verfahren zur Vorhersage der Kompatibilität von Baugruppen für eine Funktionseinheit eines Feldgeräts der Automatisierungstechnik.

In Automatisierungsanlagen, insbesondere in Prozess- und Fabrikautomatisierungsanlagen, werden vielfach Feldgeräte eingesetzt, die zur Erfassung und/oder Beeinflussung von Prozessvariablen dienen. Zur Erfassung von Prozessvariablen eines gasförmigen, flüssigen oder festen Mediums werden Sensoren verwendet, die beispielsweise in Füllstandsmessgeräte, Durchflussmessgeräte, Druck- und Temperaturmessgeräte, pH-Redoxpotentialmessgeräte, Leitfähigkeitsmessgeräte, Spektrometer, usw. integriert sind, welche die entsprechenden Prozessvariablen Füllstand, Durchfluss, Druck, Temperatur, pH-Wert, Leitfähigkeit, chemische Zusammensetzung des Mediums erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die in einer Automatisierungsanlage angeordnet sind. Eine Vielzahl solcher Feldgeräte wird von der Firma Endress + Hauser hergestellt und vertrieben.

Zur Fertigung einer elektrischen, elektronischen oder mechatronischen Funktionseinheit eines Feldgeräts ist es erforderlich, mehrere unterschiedliche Baugruppen miteinander zu kombinieren. Beispielsweise besitzt jedes Feldgerät zumindest eine Transmitterelektronik und eine Sensorelektronik, wobei sowohl die Transmitterelektronik als auch die Sensorelektronik wiederum aus einer Vielzahl von weitgehend unterschiedlichen, elektrischen und/oder elektronischen Komponenten und/oder Baugruppen bestehen.

Im Rahmen der Fertigung einer Baugruppe oder einer Funktionseinheit ist es z.B. erforderlich, zuverlässige Information über sehr viele Eigenschaften bzw. physikalische (Qualitäts-) Parameter von einzelnen elektrischen Komponenten auf der Leiterplatte zur Verfügung zu haben. Um zu der entsprechenden Kenntnis zu gelangen, werden die Eigenschaften der elektrischen Komponenten gemessen. Zusätzlich zum Messen der Eigenschaften der Einzelkomponenten der elektrischen Baugruppe werden auch Eigenschaften der elektrischen Baugruppe als Gesamtheit gemessen. Diese Messungen umfassen zum Beispiel die Messung von Kapazitäten, Induktivitäten, Systemantworten auf äußere Stimulation, z.B. Druckbeaufschlagung und/oder Temperaturbeaufschlagung, Signal-/Rausch-Verhältnisse, usw. Darüber hinaus werden Tests an der Sensorelektronik durchgeführt, wobei der Test in Abhängigkeit von der Beschaffenheit und Funktion der Sensorelektronik erfolgt, z.B. wird eine Grundkapazitätsprüfung beim kapazitiven Drucksensor durchgeführt. Ebenso betreffen die Tests die gesamte Sensorbaugruppe des Feldgeräts, die bereits die Sensorelektronik beinhalten kann. Übliche Verfahren sind hier z.B. die Kompensation, die Verifikation und/oder die Kalibration der Sensorbaugruppe.

Um eine eindeutige Zuordnung der Messwerte zu den Komponenten oder den elektrischen Baugruppen gewährleisten zu können, werden die Messwerte ebenso wie gesammelte Erfahrungswerte üblicherweise einer eindeutigen Identifikationsnummer der Komponenten oder der elektrischen Baugruppe zugeordnet. Üblicherweise handelt es sich bei der eindeutigen Identifikationsnummer um die Seriennummer der Komponente oder der elektrischen Baugruppe. Die Daten werden in einer Datenbank gespeichert.

Um eine passende Paarung von zumindest zwei beispielsweise elektrischen Baugruppen zu finden, wird üblicherweise ein Trial/Error-Verfahren angewendet: Zwei Baugruppen werden kombinierte, und anschließend wird getestet, ob die Kombination die gewünschte Spezifikation erfüllt. Dieses Verfahren wird solange fortgesetzt, bis eine passende Kombination von elektrischen Baugruppen gefunden wird. Dieses Verfahren hat die Nachteile, dass es einerseits sehr zeit- und damit auch kostenintensiv ist, und dass andererseits nicht garantiert werden kann, dass es durchaus auch eine bessere Kombination von elektrischen Baugruppen geben mag als die gefundene.

Die Ungewissheit, ob zwei Komponenten zueinander kompatibel sind, kann dazu führen, dass in einigen Fällen die Inkompatibilität von elektrischen Baugruppen in Kauf genommen wird. Das führt üblicherweise zu Nacharbeit durch Reparaturen und/oder zu steigenden Ausschusskosten.

Alternativ werden regelbasierte Systeme zum Auffinden von passenden elektrischen Baugruppen eingesetzt. Diese regelbasierten Systeme nutzen die Bauteiltoleranzen aus, um passende Paarungen zu definieren. Regelbasierte Systeme sind nur bei einer geringen Anzahl von zueinander abzugleichenden physikalischen Parametern, wie Eigenschaften, Maßen, Messwerten, Dimensionen, usw. mit annehmbarem Aufwand umsetzbar. Sobald die Mechanismen aufgrund der großen Menge an Eigenschaften/Dimensionen nicht mehr durch einfache, sozusagen menschlich definierte Regeln modellierbar bzw. nachvollziehbar sind, scheitert dieser Ansatz.

Systeme und Methoden zur Überprüfung der Kompatibilität von Baugruppen oder Funktionsmodulen sind in der DE 10 2008 030 315 A1 und der EP 3 855 259 A1 bekannt geworden.

Der Erfindung liegt die Aufgabe zugrunde, ein Verfahren vorzuschlagen, mit dem Paarungen von kompatiblen Baugruppen, die mit hoher Wahrscheinlichkeit zu einer Funktionseinheit mit einer definierten Spezifikation kombinierbar sind, aufgefunden werden.

Die Aufgabe wird gelöst durch ein automatisiertes Verfahren zur Vorhersage der Kompatibilität von Baugruppen für eine elektrische, elektronische oder mechatronische Funktionseinheit eines Feldgeräts der Automatisierungstechnik, wobei die Funktionseinheit aus zumindest einer ersten elektrischen oder elektronischen oder mechanischen Baugruppe und zumindest einer zweiten elektrischen oder elektronischen Baugruppe besteht, wobei die Funktionseinheit durch eine Vielzahl von funktionalen Parametern definiert ist und wobei zumindest einige der funktionalen Parameter in Abhängigkeit von der jeweiligen Applikation der Funktionseinheit und/oder des Feldgeräts eine vorgegebene Spezifikation aufweisen, also innerhalb eines vorgegebenen Wertebereichs liegt, wobei das Verfahren die folgenden Verfahrensschritte aufweist:
- es werden erste Baugruppen identifiziert, die innerhalb der Funktionseinheit eine erste Funktion erfüllen, wobei jede der ersten Baugruppen eine Vielzahl von ersten physikalischen Parametern aufweist, wobei sich die ersten physikalischen Parameter der ersten Baugruppe hinsichtlich ihrer Lage innerhalb eines vorgegebenen ersten Toleranzbandes unterscheiden;
- es werden zweite Baugruppen identifiziert, die innerhalb der Funktionseinheit eine zweite Funktion ausüben, wobei jede der zweiten Baugruppen eine Vielzahl von zweiten physikalischen Parametern aufweist, wobei sich die zweiten Parameter der zweiten Baugruppe hinsichtlich ihrer Lage innerhalb eines vorgegebenen zweiten Toleranzbandes unterscheiden;
- unter Verwendung von gespeicherten Daten, die auf Messwerten und/oder Erfahrungswerten zu den ersten Parametern der ersten Baugruppen und zu den zweiten Parametern der zweiten Baugruppen und/oder zu Teilkomponenten der ersten oder der zweiten Baugruppe und/oder zu den Parametern der unterschiedlichen Kombinationen von ersten Baugruppen und zweiten Baugruppen beruhen, wird zumindest eine Kombination einer ersten Baugruppe und einer zweiten Baugruppe ausgewählt, die die vorgegebenen Spezifikationen der funktionalen Parameter der Funktionseinheit mit einer großen Wahrscheinlichkeit erfüllt.

Da das erfindungsgemäße Verfahren automatisch einen Vorschlag der möglichen Paarungen bzw. Kombinationen von zumindest zwei Baugruppen für die Schaffung der gewünschten Funktionseinheit des Feldgerätes generiert, entfällt der langwierige Trial-/Error Prozess, der bislang angewendet wurde. Durch das erfindungsgemäße Verfahren ist auch eine gesteigerte Sicherheit gegeben, dass eine vorgeschlagene Kombination von zwei Baugruppen die gewünschte Spezifikation der Funktionseinheit - zumindest mit einer hohen Wahrscheinlichkeit - erfüllt. Dies führt zu erheblichen Zeit-und Kosteneinsparungen im Rahmen der Produktion eines Feldgeräts.

Nachfolgend sind Bespiele aufgelistet für die Paarung von konkreten mechanischen, elektrischen oder elektronischen Baugruppen, die in Feldgeräten zum Einsatz kommen: Der mechanische Schwingstab eines vibronischen Einstabs, z.B. eines Soliphanten, und ein elektromechanischer Piezoantrieb, also eine mechanische Baugruppe und eine elektronische Baugruppe führen zu einer mechatronischen Baugruppe; die Sensorelektronik eines Füllstandsradargeräts und die Hauptelektronik des Füllstandsradargeräts, beides elektrische und/oder elektronische Baugruppen; verschiedene Leiterkarten als Bauteile einer Hauptelektronik bei einem Gammadetektor, die in der Vorproduktion allesamt als innerhalb der Spezifikation liegend getestet wurden, in Kombination aber außerhalb der Spezifikation liegen - und zwar mit einer gewissen Wahrscheinlichkeit. Dies rührt daher, dass die Baugruppen innerhalb der durch die Spezifikation vorgegebenen Toleranzen so ungünstig liegen, dass die Paarungen außerhalb der Spezifikation liegen.

Als besonders vorteilhaft wird es angesehen, dass das Verfahren computerunterstützt arbeitet, wobei insbesondere Methoden der Künstlichen Intelligenz angewendet werden. Zentrale Komponente des Verfahrens ist z.B. ein selbstlernendes Expertensystem. Dieses Expertensystem nutzt die Methoden der Künstliche Intelligenz, um die Daten und Informationen, die bezüglich der vorhandenen elektrischen/elektronischen Komponenten, Baugruppen und Funktionseinheiten verfügbar sind, zu analysieren, anhand der gesammelten Daten und Informationen Diagnosen durchzuführen, und auf der Basis der Analyse und Diagnose einem Nutzer die für die jeweilige Funktionseinheit optimal geeigneten Baugruppen vorzuschlagen.

Als Machine-Learning- bzw. Prognosesystem kann ein neuronales Netzwerk verwendet werden. Es versteht sich, dass im Prinzip jeder Typ der bekannten Machine-Learning-Algorithmen bzw. Prognosealgorithmen verwendet werden, z.B. Bayes-Klassifikator-Algorithmen, Lineare-Regressions-Algorithmen, Lineare-Regressions-Algorithmen, Random Forest-Algorithmen, usw.

Als vorteilhaft wird es in Verbindung mit der vorliegenden Erfindung angesehen, wenn als Messwerte und/oder Erfahrungswerte Daten aus vorausgegangenen oder aktuellen Fertigungsprozessen von ersten Baugruppen, zweiten Baugruppen und/oder Funktionseinheiten verwendet werden. Die Messwerte und/oder Erfahrungswerte werden bevorzugt jeweils unter einer eindeutigen Identifikationsnummer, die der jeweiligen ersten Baugruppe oder der zweiten Baugruppe oder der Funktionseinheit zugeordnet ist, eingeordnet bzw. gespeichert.

Darüber hinaus ist in einer Ausgestaltung vorgesehen, dass erste Baugruppen und zweite Baugruppen, die außerhalb der vorgegebenen Toleranzbänder liegen, aussortiert werden.

Weiterhin werden in einer Ausgestaltung erste Baugruppen und zweite Baugruppen, deren Kombinationen außerhalb der Spezifikation der Funktionseinheit liegen, aussortiert. Sie werden für weitere Betrachtungen nicht mehr verwendet.

Erfindungsgemäß wird vorgeschlagen, dass zu jeder überprüften Kombination anhand des Grades der Lage im Toleranzband, also anhand des Grades der Übereinstimmung der physikalischen Parameter, und/oder anhand des Grades der Erfüllung der Spezifikationen der physikalischen Parameter der Funktionseinheit ein Wert für die Wahrscheinlichkeit bestimmt wird, wobei der Wert für die Wahrscheinlichkeit ein Maß dafür ist, wie hoch der Grad an Kompatibilität zwischen einer ersten Baugruppe und einer zweiten Baugruppe im Hinblick darauf ist, dass eine definierte Funktionseinheit die erforderliche Spezifikation erfüllt.

Insbesondere ist vorgesehen, dass das Machine-Learning- bzw. Prognosesystem für jede prognostizierte Kombination von zumindest zwei Baugruppen einen Index berechnet, welcher Index ein Maß für die Wahrscheinlichkeit der gewünschten Funktionstüchtigkeit der beiden kombinierten Baugruppen ist. Eine absolute Aussage, ob eine Kombination die gewünschte Spezifikation trifft, lässt sich auch von einem Machine-Learning- bzw. Prognosesystem wie einem neuronalen Netzwerk schwer treffen. Mittels des Indexes kann aber abgeschätzt werden, wie hoch die Wahrscheinlichkeit dafür ist. Es kann beispielsweise vorgesehen sein, einen Index mit einem Wert zwischen 0 und 1 auszugeben. Je größer der Index ist, desto höher ist die Wahrscheinlichkeit. Es kann zudem vorgesehen sein, dass das Machine-Learning- bzw. Prognosesystem zwei Ausgänge besitzt und eine interne Klassifizierung der gefundenen Kombinationen von Baugruppen auf der Grundlage des Indexes vornimmt. So kann vorgesehen sein, dass am ersten Ausgang (Positivausgang) diejenigen Kombinationen ausgegeben werden, deren Index größer oder größer gleich einem vorbestimmten Wert ist, beispielsweise 0.5. Konträr dazu werden am zweiten Ausgang (Negativausgang) diejenigen Kombinationen ausgegeben, deren Index kleiner als 0.5 ist.

Erfindungsgemäß wird eine Kombination von Baugruppen zur Fertigung der Funktionseinheit vorgeschlagen - und zwar diejenige, die im Hinblick auf die Funktionstüchtigkeit der Funktionseinheit den höchsten Grad an Kompatibilität erreicht.

Darüber hinaus ist in einer Ausgestaltung vorgesehen, dass alle überprüften Kombinationen von ersten Baugruppen und zweiten Baugruppen und die zugehörigen Grade der Kompatibilität in einer geordneten Auflistung - einem ranking - zur Verfügung gestellt werden.

Die Erfindung wird anhand der Figuren näher erläutert. Es zeigt:

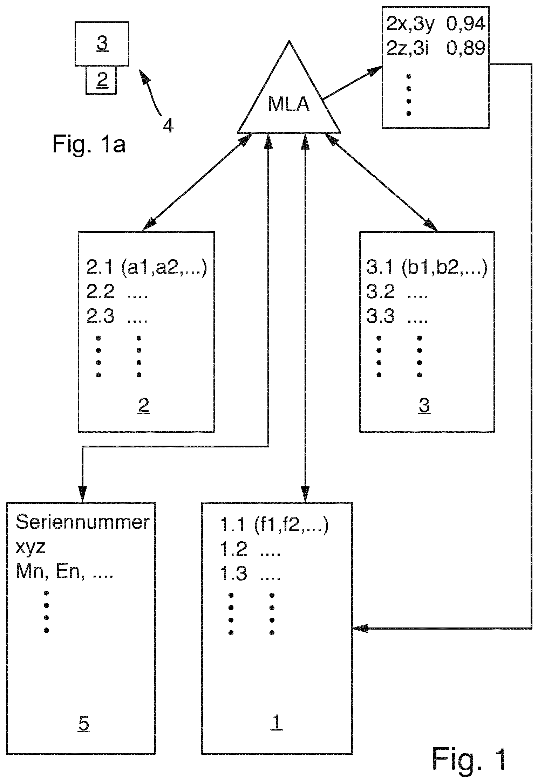

Fig. 1: eine schematische Darstellung, die die Arbeitsweise einer Ausgestaltung des erfindungsgemäßen Verfahrens visualisiert, und
Fig. 1a: eine schematische Darstellung eines Feldgeräts der Automatisierungstechnik.

Die Erfindung beschreibt ein automatisiertes Verfahren zur Vorhersage der Kompatibilität von mechanischen, elektrischen und/oder elektronischen Baugruppen 2, 3 für die Fertigung einer Funktionseinheit 1 eines Feldgeräts 4 oder auch für ein Feldgerät 4 der Automatisierungstechnik. Die Funktionseinheit 1 besteht aus einer ersten Baugruppe 2 und zumindest einer zweiten Baugruppe 3. Die Funktionseinheit 1 lässt sich durch eine Vielzahl von funktionalen Parametern f1, f2, f3, .... beschreiben. Zumindest einige der funktionalen Parameter f1, f2, f3, .... weisen in Abhängigkeit von der jeweiligen Applikation der Funktionseinheit 1 und/oder des Feldgeräts 4 eine vorgegebene Spezifikation auf, d.h. sie liegen innerhalb eines vorgegebenen Wertebereichs.

Allgemein lässt sich eine Ausgestaltung des erfindungsgemäße Verfahren durch die folgenden Verfahrensschritte beschreiben: In einem ersten Schritt werden erste Baugruppen 2 identifiziert, die innerhalb der Funktionseinheit 1 eine erste Funktion erfüllen, wobei jede der ersten Baugruppen 2 eine Vielzahl von ersten physikalischen Parametern a1, a2, a3, .. aufweist. Die physikalischen Parameter a1, a2, a3, .. der ersten Baugruppe 2 unterscheiden sich hinsichtlich ihrer Lage innerhalb eines vorgegebenen ersten Toleranzbandes. Weiterhin werden zweite Baugruppen 3 identifiziert, die innerhalb der Funktionseinheit 1 eine zweite Funktion ausüben, wobei jede der zweiten Baugruppen 3 eine Vielzahl von zweiten physikalischen Parametern b1, b2, b3, .. aufweist. Auch die zweiten Parameter b1, b2, b3, .. der zweiten Baugruppe 2 können sich hinsichtlich ihrer Lage innerhalb eines vorgegebenen zweiten Toleranzbandes unterscheiden.

Anschließend wird unter Verwendung von gespeicherten Daten zumindest eine Kombination von erster Baugruppe 2 und zweiter Baugruppe 3 ausgewählt, die die vorgegebenen Spezifikationen der funktionalen Parameter f1, f2, f3, ... der Funktionseinheit 1 mit einer großen Wahrscheinlichkeit erfüllt.

Die Daten sind beispielsweise: Messwerte Mn, n=1....y bzw. Erfahrungswerte En, n=1....x zu den ersten Parametern a1, a2, a3, .. der ersten Baugruppen 2 und zu den zweiten Parametern b1, b2, b3, .. der zweiten Baugruppen 3, und/oder zu Teilkomponenten der ersten oder der zweiten Baugruppe 2, 3, und/oder zu den Parametern ab1, ab2, ab3, ... der unterschiedlichen Kombinationen von ersten Baugruppen 2 und zweiten Baugruppen 3 beruhen.

Nachfolgend ist beispielhaft das Auffinden einer geeigneten Paarung von einer ersten Baugruppe 2 und einer zweiten Baugruppe 3 beschrieben. Bei der ersten Baugruppe 2 handelt es sich um eine Transmitterelektronik, bei der zweiten Baugruppe 3 handelt es sich um eine Sensorelektronik. Die Kombination der beiden führt zu einem Feldgerät 4 der Automatisierungstechnik (Fig. 1a). Beispiele für derartige Feldgeräte 4 sind in der Beschreibungseinleitung in unterschiedlichen Ausgestaltungen genannt. Auf eine Wiederholung an dieser Stelle wird verzichtet.

In der Elektronikfertigung werden sehr viele Eigenschaften von einzelnen auf einer Leiterplatte montierten Komponenten, sowie Eigenschaften der gesamten Elektronikbaugruppe 3, die auf der Leiterplatte montiert ist, vermessen. Die Messwerte Mn werden zur Seriennummer der Baugruppe 3 in einer Datenbank 5 gespeichert.

Gleiches gilt für die Sensorbaugruppe. Entlang der Fertigungskette werden verschiedenste Messwerte Mn von Eigenschaften einzelner Komponenten oder der Sensorbaugruppe selbst erfasst. Beispielsweise wird im Falle eines kapazitiven Drucksensors am Sensor selbst eine sog. Grundkapazitätsprüfung durchgeführt. Messungen werden auch an der Sensorbaugruppe, die Sensor (= erste Baugruppe 2) und Sensorelektronik (= zweite Baugruppe 3) umfasst, durchgeführt. Zu nennen sind hier insbesondere die Kompensation, die Verifikation oder die Kalibration der Sensorbaugruppe (= Funktionseinheit 1).

Generell umfassen die Messungen von physikalischen Parametern, die die Messdaten Mn bilden, die Messung von Widerständen, Induktivitäten, Kapazitäten, von Systemantworten auf äußere Stimulation, z.B. Druckbeaufschlagung und/oder Temperaturbeaufschlagung, von Signal-/Rausch-Verhältnissen - um nur einige wenige Beispiele zu nennen.

Aufgabe des Machine-Learning-Algorithmus MLA ist es, die gespeicherten Messwerte Mn und/oder Erfahrungswerte En hinsichtlich der physikalischen Parameter der einzelnen ersten Baugruppen 2, z.B. von Sensorbaugruppen für Druckmessgeräte, und der zweiten Baugruppen 3, z.B. Transmitterbaugruppen für Druckmessgeräte, derart auszuwerten und/oder zu analysieren, dass als Ergebnis zumindest eine Paarung von ersten und zweiten Baugruppen 2, 3 ausgegeben wird, die mit hoher oder höchster Wahrscheinlichkeit zu einer Funktionseinheit 1, z.B. zu einem Feldgerät 4, führt, das die Spezifikationen erfüllt, die in der jeweiligen Applikation gefordert werden.

Basierend auf einer Vielzahl von Messwerten Mn und Erfahrungswerten En, die aus früheren Messreihen oder gemachten Beobachtungen herrühren, werden mittels künstlicher Intelligenz gezielt solche Paarungen vorhergesagt, die mit hoher Wahrscheinlichkeit zueinander kompatibel sind und somit zu einer spezifikationstreuen Funktionseinheit 1, z.B. einem spezifikationsgetreuen Feldgerät 4, führen.

Idealerweise erfolgt eine Klassifizierung aller möglichen Kombinationen von Baugruppen 2, 3, die zu einer geeigneten Funktionseinheit 1 führen. Hierzu wird zu jeder Kombination eine Wahrscheinlichkeit ausgegeben, die den Grad an Kompatibilität von zwei Baugruppen 2, 3 in eine kontinuierliche Größe abbildet. Basierend auf diesen Angaben kann ein Kompatibilitätsranking über alle Kombinationsmöglichkeiten aller aktuell möglichen Paarungen von Baugruppen 2, 3 erstellt werden. Hierbei ist es unerheblich, ob die analysierten Kombinationen auf Baugruppen 2, 3 beruhen, die sich bereits im Lager oder noch in der Produktionslinie befinden.

Anschließend kann diese Liste mit den verschiedensten Kombinationsmöglichkeiten von Baugruppen 2, 3 von dem Machine-Learning-Algorithmus MLA so abgearbeitet werden, dass besonders die Baugruppen 2, 3, für welche es wenige oder keinen passenden Partner gibt, also die weniger kompatiblen Baugruppen 2, 3, zuerst abgearbeitet bzw. aussortiert werden. In einer weiteren Ausbaustufe können Baugruppen 2, 3, die besonders schwer oder besonders leicht kombinierbar sind, länger in der Warteschlange verbleiben, um ggf. mit später im Lager eintreffenden Baugruppen 2, 3 kombiniert zu werden.

Schlussendlich ist es vorgesehen, dass die als ideal/passend aufgefundene Paarung von Baugruppen 2x, 3y durch Angabe der entsprechenden Seriennummern durch das Machine-Learing-System MLS direkt an die Produktionslinie übertragen wird. Zur Übertragung werden beispielsweise Stücklisten genutzt - z.B. via bill of materials - oder besondere Mechanismen wie Pick-by-light.

Als Startpunkt für das Auffinden kompatibler Paarungen von Baugruppen 2, 3 kann/können vom Nutzer mindestens ein, aber typischerweise viele physikalische Startparameter(n) vorgegeben werden, der/die für jeden Komponententyp als "Qualitätsparameter" gemessen/überprüft werden soll(en), wie z.B. das Signal/Rauschverhältnis, der Temperaturkoeffizient, die Rauheit, die Steifigkeit oder die Kapazität. Weitere Qualitätsparameter können - falls erforderlich - selbstverständlich geprüft werden.

Basis des erfindungsgemäßen Verfahrens ist eine Datenbank 5 in der alle Messdaten Mn und Erfahrungswerte En zu der Seriennummer der jeweiligen Baugruppe 2, 3 oder Funktionseinheit 1 abgespeichert sind. Die Datenbasis der Datenbank 5 wird kontinuierlich erweitert, ergänzt und ggf. korrigiert. Abgespeichert sind Informationen über die funktionalen Eigenschaften/Qualitäten einer jeden einzelnen Baugruppe 2, 3 oder Funktionseinheit. Die Daten Mn, En werden beispielsweise während der Produktionsprozesse der Baugruppe 2, 3 und Funktionseinheiten 1 gewonnen. Entsprechende Informationen sind aus zurückliegenden Produktionsprozessen von Baugruppen 2, 3 und Funktionsgruppen 1 üblicherweise bekannt. Die Informationen über die Kompatibilität zwischen verschiedenen Varianten von Baugruppen 2, 3 zu Funktionseinheiten 1 sind gleichfalls vorhanden.

Von dem Machine-Learning-Algorithmus MLA werden die verschiedenen in Frage kommenden Baugruppen zur Schaffung einer Funktionseinheit mit einer vorgegebenen Spezifikation virtuell "montiert". Auf der Grundlage der gesammelten Informationen hinsichtlich der Kompatibilität zwischen verschiedenen Baugruppen 2, 3 - z.B. in einer Testanlage - lassen sich Vorhersagen hinsichtlich der Kompatibilität von modifizierten oder neuen Baugruppen 2, 3 treffen. Anhand eines Modells bestimmt eine KI (Künstliche Intelligenz) die Kombination bzw. zumindest eine Kombination von Baugruppen 2, 3, die die vorgegebene Spezifikation erfüllt. Bevorzugt ist da Modell so trainiert, dass es diejenige Kombinationen von zwei Baugruppen 2, 3 auswählt, die mit der höchsten Wahrscheinlichkeit die vorgegebene Spezifikation erfüllen.

Als mechanische oder elektrische bzw. elektronische Baugruppen 2, 3 kommen alle Ebenen von Komponententypen in Frage, z.B. Chips, Leiterplatten, Sensoren, mechanische Komponenten, wie Antennen, Stecker, Aktoren. Allgemein gesprochen wird in Verbindung mit der Erfindung unter einer Baugruppe 2, 3 alles verstanden, was in der Lage ist, selbst eine Funktion zu erfüllen.

Der Vorteil der Erfindung ist - wie gesagt - darin zu sehen, dass keine Zeit mit dem Testen von nicht passenden Kombinationen von Baugruppen 2, 3 und dem Messen der entsprechenden Parameter vertan werden muss. Gezielt lassen sich Kombinationen auswählen, die die gewünschte Spezifikation erfüllen. Bevorzugt ermittelt der Optimierungsalgorithmus der KI - insbesondere des Machine-Learning-Algorithmus' - für jede Art von möglicherweise passenden Baugruppen 2, 3 einen Qualitätsfaktor ("Grad an Kompatibilität") und generiert anhand der Qualitätsfaktoren eine Vorhersage, welche der möglichen passenden Kombinationen die optimale ist.

## Patentansprüche

1. Automatisiertes Verfahren zur Vorhersage der Kompatibilität von Baugruppen (2, 3) für eine elektrische, elektronische oder mechatronische Funktionseinheit (1) eines Feldgeräts (4) der Automatisierungstechnik, wobei die Funktionseinheit (1) aus zumindest einer ersten elektrischen oder elektronischen oder mechanischen Baugruppe (2) und zumindest einer zweiten elektrischen oder elektronischen Baugruppe (3) besteht, wobei die Funktionseinheit (1) durch eine Vielzahl von funktionalen Parametern (f1, f2, f3, ....) definiert ist und wobei zumindest einige der funktionalen Parameter (f1, f2, f3, ....) in Abhängigkeit von der jeweiligen Applikation der Funktionseinheit (1) und/oder des Feldgeräts (4) eine vorgegebene Spezifikation aufweisen, also innerhalb eines vorgegebenen Wertebereichs liegt, wobei das Verfahren die folgenden Verfahrensschritte aufweist:
- es werden erste Baugruppen (2) identifiziert, die innerhalb der Funktionseinheit (1) eine erste Funktion erfüllen, wobei jede der ersten Baugruppen (2) eine Vielzahl von ersten physikalischen Parametern (a1, a2, a3, ..) aufweist, wobei sich die ersten physikalischen Parameter (a1, a2, a3, ..) der ersten Baugruppe (2) hinsichtlich ihrer Lage innerhalb eines vorgegebenen ersten Toleranzbandes unterscheiden;
- es werden zweite Baugruppen (3) identifiziert, die innerhalb der Funktionseinheit (1) eine zweite Funktion ausüben, wobei jede der zweiten Baugruppen (3) eine Vielzahl von zweiten physikalischen Parametern (b1, b2, b3, ..) aufweist, wobei sich die zweiten Parameter (b1, b2, b3, ..) der zweiten Baugruppe (2) hinsichtlich ihrer Lage innerhalb eines vorgegebenen zweiten Toleranzbandes unterscheiden;
- unter Verwendung von gespeicherten Daten, die auf Messwerten oder Erfahrungswerten (Mn, n=1....x) zu den ersten Parametern (a1, a2, a3, ..) der ersten Baugruppen (2) und zu den zweiten Parametern (b1, b2, b3, ..) der zweiten Baugruppen (3) und/oder zu Teilkomponenten der ersten oder der zweiten Baugruppe (2, 3) und/oder zu den Parametern (ab1, ab2, ab3, ...) der unterschiedlichen Kombinationen von ersten Baugruppen (2) und zweiten Baugruppen (3) beruhen, wird zumindest eine Kombination einer ersten Baugruppe (2) und einer zweiten Baugruppe (3) ausgewählt, die die vorgegebenen Spezifikationen der funktionalen Parameter (f1, f2, f3, ...) der Funktionseinheit (1) mit einer großen Wahrscheinlichkeit erfüllt, wobei zu jeder überprüften Kombination von erster Baugruppe (1) und zweiter Baugruppe (2) anhand des Grades der Lage im Toleranzband und/oder anhand des Grades der Erfüllung der Spezifikationen der physikalischen Parameter der Funktionseinheit (1) ein Wert für die Wahrscheinlichkeit bestimmt wird, wobei der Wert für die Wahrscheinlichkeit ein Maß dafür ist, wie hoch der Grad an Kompatibilität zwischen einer ersten Baugruppe (1) und einer Baugruppe (2) im Hinblick darauf ist, dass eine aus den Baugruppen (1, 2) kombinierte Funktionseinheit (1) die erforderliche Spezifikation erfüllt, wobei zumindest die Kombination für die Fertigung der Funktionseinheit (1) ausgewählt wird, welche den höchsten Grad an Kompatibilität erreicht.

2. Verfahren nach Anspruch 1,
wobei das Verfahren computerunterstützt arbeitet, wobei insbesondere Methoden der Künstlichen Intelligenz (AI) angewendet werden.

3. Verfahren nach Anspruch 1 oder 2,
wobei als Messwerte und/oder Erfahrungswerte (Mn, n=1....x) Daten aus vorausgegangenen oder aktuellen Fertigungs- oder Prüfprozessen der ersten Baugruppen (2), der zweiten Baugruppen (3) und/oder von Funktionseinheiten (1) verwendet werden, wobei die Messwerte und/oder Erfahrungswerte (Mn, n=1....x) jeweils unter einer eindeutigen Identifikationsnummer (ID) gespeichert sind, wobei die Identifikationsnummer (ID) die jeweilige erste Baugruppe (2) oder die jeweilige zweite Baugruppe (3) oder die Funktionseinheit (1) eindeutig kennzeichnet.

4. Verfahren nach Anspruch 1, 2 oder 3,
wobei erste Baugruppen (2) und zweite Baugruppen (3), die außerhalb der vorgegebenen Toleranzbänder liegen, aussortiert werden.

5. Verfahren nach einem oder mehreren der vorhergehenden Ansprüche,
wobei erste Baugruppe (2) und zweite Baugruppe (3), deren Kombination außerhalb der Spezifikation der Funktionseinheit (1) liegt, aussortiert werden.

6. Verfahren nach Anspruch 1,
wobei alle überprüften Kombinationen von ersten Baugruppen (2) und zweiten Baugruppen (3) und die zugehörigen Grade der Kompatibilität in einer geordneten Auflistung - einem ranking - zur Verfügung gestellt werden.

## Claims

1. An automated method for predicting the compatibility of assemblies (2, 3) for an electrical, electronic, or mechatronic functional unit (1) of a field device (4) used in automation technology, wherein the functional unit (1) comprises at least one first electrical, electronic, or mechanical assembly (2) and at least one second electrical or electronic assembly (3), wherein the functional unit (1) is defined by a plurality of functional parameters (f1, f2, f3, ....), and wherein at least some of the functional parameters (f1, f2, f3, ....) exhibit a predefined specification depending on the respective application of the functional unit (1) and/or the field device (4), i.e. lie within a predefined value range, the method comprising the following steps:
• identifying first assemblies (2) that perform a first function within the functional unit (1), wherein each of the first assemblies (2) has a plurality of first physical parameters (a1, a2, a3, ...), the first physical parameters (a1, a2, a3, ...) of the respective first assembly (2) differing with respect to their position within a predefined first tolerance band;
• identifying second assemblies (3) that perform a second function within the functional unit (1), wherein each of the second assemblies (3) has a plurality of second physical parameters (b1, b2, b3, ...), the second physical parameters (b1, b2, b3, ...) of the respective second assembly (3) differing with respect to their position within a predefined second tolerance band;
• using stored data based on measured values or empirical values (Mn, n = 1....x) relating to the first parameters (a1, a2, a3, ...) of the first assemblies (2), the second parameters (b1, b2, b3, ...) of the second assemblies (3), and/or sub-components of the first or second assemblies (2, 3), and/or parameters (ab1, ab2, ab3, ...) of different combinations of first assemblies (2) and second assemblies (3), selecting at least one combination of a first assembly (2) and a second assembly (3) that fulfils the predefined specifications of the functional parameters (f1, f2, f3, ...) of the functional unit (1) with a high probability,
wherein, for each evaluated combination of first assembly (2) and second assembly (3), a probability value is determined on the basis of the degree of position within the respective tolerance band and/or on the basis of the degree of fulfilment of the specifications of the physical parameters of the functional unit (1),
wherein the probability value is a measure of the degree of compatibility between a first assembly (2) and a second assembly (3) with regard to a functional unit (1) formed from the assemblies (2, 3) meeting the required specification,
and wherein at least the combination selected for manufacturing the functional unit (1) is the combination achieving the highest degree of compatibility.

2. The method according to claim 1,
wherein the method is computer-assisted and, in particular, employs methods of artificial intelligence (AI).

3. The method according to claim 1 or 2,
wherein the measured values and/or empirical values (Mn, n = 1....x) comprise data from previous or current manufacturing processes and/or test processes of the first assemblies (2), the second assemblies (3), and/or functional units (1),
wherein the measured values and/or empirical values (Mn, n = 1....x) are respectively stored under a unique identification number (ID),
and wherein the identification number (ID) uniquely identifies the respective first assembly (2), the respective second assembly (3), or the functional unit (1).

4. The method according to claim 1, 2 or 3,
wherein first assemblies (2) and second assemblies (3) that lie outside the predefined tolerance bands are rejected.

5. The method according to one or more of the preceding claims,
wherein first assemblies (2) and second assemblies (3), the combination of which lies outside the specification of the functional unit (1), are rejected.

6. The method according to claim 1,
wherein all evaluated combinations of first assemblies (2) and second assemblies (3), together with their associated degrees of compatibility, are provided in an ordered list, namely a ranking.

## Revendications

1. Procédé automatisé de prédiction de la compatibilité de modules (2, 3) pour une unité fonctionnelle électrique, électronique ou mécatronique (1) d'un appareil de terrain (4) de la technique d'automatisation, l'unité fonctionnelle (1) étant constituée d'au moins un premier module électrique, électronique ou mécanique (2) et d'au moins un second module électrique ou électronique (3), l'unité fonctionnelle (1) étant définie par une pluralité de paramètres fonctionnels (f1, f2, f3, ....), et au moins certains des paramètres fonctionnels (f1, f2, f3, ....) présentant une spécification prédéfinie en fonction de l'application respective de l'unité fonctionnelle (1) et/ou de l'appareil de terrain (4), c'est-à-dire étant compris dans une plage de valeurs prédéfinie,
le procédé comprenant les étapes suivantes :
• identification de premiers modules (2) assurant une première fonction au sein de l'unité fonctionnelle (1), chacun des premiers modules (2) présentant une pluralité de premiers paramètres physiques (a1, a2, a3, ...), les premiers paramètres physiques (a1, a2, a3, ...) du premier module (2) différant quant à leur position à l'intérieur d'une première bande de tolérance prédéfinie ;
• identification de seconds modules (3) assurant une seconde fonction au sein de l'unité fonctionnelle (1), chacun des seconds modules (3) présentant une pluralité de seconds paramètres physiques (b1, b2, b3, ...), les seconds paramètres physiques (b1, b2, b3, ...) du second module (3) différant quant à leur position à l'intérieur d'une seconde bande de tolérance prédéfinie ;
• à l'aide de données mémorisées reposant sur des valeurs mesurées ou des valeurs empiriques (Mn, n = 1....x) relatives aux premiers paramètres (a1, a2, a3, ...) des premiers modules (2), aux seconds paramètres (b1, b2, b3, ...) des seconds modules (3) et/ou à des sous-composants des premiers ou des seconds modules (2, 3) et/ou aux paramètres (ab1, ab2, ab3, ...) de différentes combinaisons de premiers modules (2) et de seconds modules (3), sélection d'au moins une combinaison d'un premier module (2) et d'un second module (3) satisfaisant avec une forte probabilité aux spécifications prédéfinies des paramètres fonctionnels (f1, f2, f3, ...) de l'unité fonctionnelle (1),
dans lequel, pour chaque combinaison examinée d'un premier module (2) et d'un second module (3), une valeur de probabilité est déterminée sur la base du degré de positionnement dans la bande de tolérance et/ou sur la base du degré de respect des spécifications des paramètres physiques de l'unité fonctionnelle (1),
dans lequel ladite valeur de probabilité constitue une mesure du degré de compatibilité entre un premier module (2) et un second module (3) en ce qui concerne l'aptitude d'une unité fonctionnelle (1) constituée de ces modules (2, 3) à satisfaire à la spécification requise,
et dans lequel au moins la combinaison sélectionnée pour la fabrication de l'unité fonctionnelle (1) est celle présentant le plus haut degré de compatibilité.

2. Procédé selon la revendication 1,
**caractérisé en ce que** le procédé est mis en œuvre à l'aide d'un ordinateur et qu'il utilise notamment des méthodes d'intelligence artificielle (IA).

3. Procédé selon la revendication 1 ou 2,
**caractérisé en ce que** les valeurs mesurées et/ou les valeurs empiriques (Mn, n = 1....x) comprennent des données issues de procédés de fabrication ou d'essais antérieurs ou en cours des premiers modules (2), des seconds modules (3) et/ou des unités fonctionnelles (1),
**en ce que** les valeurs mesurées et/ou les valeurs empiriques (Mn, n = 1....x) sont respectivement enregistrées sous un numéro d'identification unique (ID),
et **en ce que** le numéro d'identification (ID) identifie de manière univoque le premier module (2) concerné, le second module (3) concerné ou l'unité fonctionnelle (1).

4. Procédé selon l'une quelconque des revendications 1 à 3,
**caractérisé en ce que** les premiers modules (2) et les seconds modules (3) situés en dehors des bandes de tolérance prédéfinies sont éliminés.

5. Procédé selon l'une quelconque des revendications précédentes,
**caractérisé en ce que** les premiers modules (2) et les seconds modules (3) dont la combinaison se situe en dehors de la spécification de l'unité fonctionnelle (1) sont éliminés.

6. Procédé selon la revendication 1,
**caractérisé en ce que** l'ensemble des combinaisons examinées de premiers modules (2) et de seconds modules (3), ainsi que les degrés de compatibilité associés, sont fournis sous la forme d'une liste ordonnée, à savoir un classement (« ranking »).
